# EUROPEAN PATENT APPLICATION

(11) **EP 4 663 551 A1**
(43) Date of publication of application: **17.12.2025**
(21) Application number: 24181146.2
(22) Date of filing: 10.06.2024
(51) Int. Cl.: B64D 39/00, B64D 39/06, B64U 50/34

(54) **IN-FLIGHT REFUELLING SYSTEM**

(71) Applicant: AIRBUS Operations GmbH, 21129 Hamburg (DE)
(72) Inventor: Zantz, Tanno, 21129 Hamburg (DE)

(57) **Abstract**

An in-flight refuelling system (10) for an aircraft is provided. The system comprises a refuelling hose (11) of an in-flight refuelling system (10) for a tanker aircraft (100) and a refuelling probe (12) of an in-flight refuelling system for a receiver aircraft (101). The refuelling hose (12) comprises a coupling (14) comprising an opening for receiving a refuelling probe (12) of a receiver aircraft (101), a main body (81) comprising a fuel passage (23), and a valve member (28) disposed in the fuel passage (23) that is configured to close the fuel passage (23) and to open the fuel passage (23) to allow refuelling of the receiver aircraft (101). The valve member (28) comprises a nozzle engaging portion (29) that is shaped to correspond to a nozzle tip (16) of the refuelling probe (12) and means (36, 37; 28, 75) for transmitting electric power to the refuelling probe (12). The refuelling probe (12) comprises a nozzle (15) comprising a nozzle tip (16) and a fuel passage. The nozzle tip (16) comprises means (42; 91) for receiving electric power from a refuelling hose (11) of a tanker aircraft (100).

## Description

The present disclosure relates to an in-flight refuelling system.

In-flight refuelling systems are also known as air-to-air refuelling systems. Air to air refuelling is a complex operation, as both the tanker and the receiver aircraft are flying. Several systems may be used for refuelling. One system is the hose and drogue. A tanker aircraft comprises a hose to provide fuel to a receiver aircraft. A drogue assembly is attached at the end of the hose and comprises a coupling element that is connected to a probe of the receiver aircraft to refuel the receiver aircraft. The drogue assembly comprises the coupling, which is also known as a reception coupling, and drogue canopy. The drogue canopy stabilises the refuelling hose trailing from the tanker aircraft, and provides a drag force. The receiver aircraft is equipped with the refuelling probe which projects from the receiver aircraft. The refuelling probe comprises a nozzle disposed at the forward end of the refuelling probe which is arranged and configured to engage with the coupling element of the refuelling hose of the tanker aircraft.

On engagement of the refuelling probe with the coupling element, the refuelling probe acts against the drag force provided by the drogue assembly. Following engagement, a fuel flow path is established between the tanker aircraft and the receiver aircraft via the refuelling hose, the drogue assembly, and the refuelling probe allowing liquid fuel, e.g. kerosene to flow from the tanker aircraft into the receiver aircraft.

EP 2 986 508 B1 describes a reception coupling which comprises a fuel passage therethrough providing a channel for fuel for refuelling the receiver aircraft, and a valve for opening and closing the fuel passage to prevent fuel freely flowing out from the refuelling hose when the refuelling probe of a receiver aircraft is not engaged with the reception coupling. Conventional reception couplings comprise a poppet-type valve.

Fuel in the refuelling hose is pressurised to achieve a high flow rate of fuel to the receiver aircraft. The fuel pressure tends to act on a surface of the valve urging it towards a closed position. On engagement of the refuelling probe with the reception coupling, the refuelling probe pushes against the valve with an engagement force to open the fuel passage. The engagement force is sufficient to overcome the closing force on the valve caused by the fuel pressure.

It is desirable to provide improvements for in-flight refuelling systems.

According to the invention, a refuelling hose of an in-flight refuelling system for a tanker aircraft is provided. The refuelling hose comprising a coupling. The coupling comprises an opening for receiving a refuelling probe of a receiver aircraft, a main body comprising a fuel passage, and a valve member disposed in the fuel passage. The valve member is configured to close the fuel passage and to open the fuel passage to allow refuelling of the receiver aircraft. The valve member comprises a nozzle engaging portion that is shaped to correspond to a nozzle tip of the refuelling probe and that comprises means for transmitting electric power to the refuelling probe.

The refuelling hose and the in-flight refuelling system provides refuelling of a receiver aircraft with fuel, i.e. liquid fuel such as kerosene, and with electric power. This is achieved using the same coupling of the refuelling hose of the tanker aircraft and, at the receiver aircraft, the same refuelling probe.

The refuelling hose may be part of a drogue assembly that includes a canopy. The receiver aircraft may be manned or an unmanned aircraft, e.g. a drone.

In an embodiment, the means for transmitting electric power comprise a third electrically conductive member and a fourth electrically conductive member for transmitting electric power to the refuelling probe by resistive contact, i.e. by forming a physical contact and therefore an electrically resistive contact between corresponding electrically conductive members on the refuelling probe.

In an embodiment, the third electrically conductive member is provided by a first portion of the valve member and the fourth electrically conductive member is provided by a second portion of the valve member and the third and fourth electrically conductive members are electrically isolated from one another, e.g. by an electrically insulating layer that it attached to and between the first and second portions of the valve member.

In an embodiment, the first portion and the second portion comprise a recess that is formed in the valve member.

In an embodiment, the valve member comprises a stepped recess. An outer portion of the stepped recess is sized and shaped to contact the side wall of the second electrically conductive member, an intermediate portion is sized and shaped to engage the electrically isolation and an inner portion is sized and shaped to engage the rod of a two-pin probe of the nozzle of the receiver aircraft. The inner portion faces towards the refuelling hose and the outer portion faces towards the refuelling probe.

In an embodiment, to allow electric power to be transferred via the valve member and the nozzle from the tanker aircraft to the receiver aircraft, the third electrically conductive member contacts the first electrically conductive member of the nozzle and the fourth electrically conductive member contacts the second electrically conductive member of the nozzle

In another embodiment, as the nozzle is pushed into the coupling, the nozzle tip pushes against the engaging portion and moves the valve member form the closed position to the open position forming a flow path between the valve member and the inner walls of the fuel passage, allowing fuel within the refuelling hose to pass around the valve member and into the nozzle so as to refuel the receiver aircraft and pushes the third electrically conductive member into contact with the first electrically conductive member of the nozzle and the fourth electrically conductive member into contact with the second electrically conductive member of the nozzle so as to allow electric power to be transferred via the valve member and the nozzle from the tanker aircraft to the receiver aircraft,
In an embodiment, the fourth electrically conductive members are in contact with the fuel in the fuel passage when the valve member is in the open position.

In an alternative embodiment, the means for transmitting electric power of the coupling comprise at least one electrically conductive coil to transfer electric power to the refuelling probe by inductive coupling. Inductive coupling may also be called wireless charging. The refuelling probe has a corresponding coil to allow charging of the receiver aircraft by inductive coupling between the coils. There is not direct physical contact between the two coils.

According to the invention, a fuelling probe of an in-flight refuelling system for a receiver aircraft is provided. The refuelling probe comprises a nozzle comprising a nozzle tip and a fuel passage. The nozzle tip comprises means for receiving electric power from a refuelling hose of a tanker aircraft.

In an embodiment, the means for receiving electric power comprise a first electrically conductive member and a second electrically conductive member for receiving power from the refuelling hose by resistive contact.

In an embodiment, the first electrically conductive member and the second electrically conductive member that are electrically isolated from one another. For example, the first electrically conductive member is provided by a first portion of the nozzle tip and the second electrically conductive member is provided by a second portion of the nozzle tip.

In an embodiment, the first electrically conductive member comprises a rod and the second electrically conductive member comprises a cylinder that is concentrically located on the rod separated from the rod by electrically insulating material to form a two-pin probe. The two-pin probe is slidably mounted within a bore of the nozzle tip.

In an embodiment, the rod is attached to the cylinder by the electrically insulating material and the rod and cylinder together are slidably mounted within the bore of the nozzle tip. In another embodiment, the rod and cylinder are slidably mounted with respect to one another as well as the nozzle tip so that the electrically insulating material is attached to only one of the rod and cylinder.

In an embodiment, the nozzle further comprises an inner sleeve that surrounds the base of the nozzle tip, a nozzle body which is attached to a base of the two-pin probe, a central support and an outer sleeve. The inner sleeve is engaged to the nozzle body by a first spring that surrounds the base of the nozzle tip. The outer sleeve is engaged to the nozzle body by a second spring that surrounds the first spring, and the outer sleeve is coupled to the nozzle body by a ball/spring and to the inner sleeve by a spring;
In an embodiment, the nozzle tip is electrically isolated from two-pin probe and from the nozzle body.

In another embodiment, the rod of the two-pin probe is electrically isolated from the nozzle tip and the nozzle tip provides the second pin of the two-pin probe.

In an embodiment, the rod has a greater length than the cylinder such that the rod extends beyond the cylinder. The electrical isolation between the rod and cylinder has end face that is located between the second end face of the cylinder and the tip of the rod. Consequently, the distal end portion of the side wall of the rod that adjoin the tip remain exposed from electrical isolation.

In an alternative embodiment, the end face of first and second electrically conductive members is substantially coplanar.

In an embodiment, recesses for the balls are provided and the balls are pressed into the recesses by springs. A certain force applied to the two-pint probe causes balls to press against springs move out of recess and allow the two-pin probe to slidably move with respect to the nozzle tip.

In an embodiment, the third electrically conductive member contacts the first electrically conductive member of the nozzle and the fourth electrically conductive member contacts the second electrically conductive member of the nozzle to allow electric power to be transferred via the valve member and the nozzle from the tanker aircraft to the receiver aircraft.

In an embodiment, as the nozzle is pushed into the coupling, the nozzle tip pushes against the engaging portion and moves the valve member form the closed position to the open position forming a flow path between the valve and the inner walls of the fuel passage, allowing fuel within the refuelling hose to pass around the valve member and into the nozzle so as to refuel the receiver aircraft and pushes the third electrically conductive member into contact with the first electrically conductive member of the nozzle and the fourth electrically conductive member into contact with the second electrically conductive member of the nozzle so as to allow electric power to be transferred via the valve member and the nozzle from the tanker aircraft to the receiver aircraft.

In an embodiment, the second and fourth electrically conductive members are in contact with the fuel in the fuel passage when the valve member is in the open position.

In an alternative embodiment, the means for receiving electric power comprises at least one electrically conductive coil to receive electric power from the refuelling hose by inductive coupling.

In an embodiment, an in-flight refuelling system for an aircraft is provided in which the system comprises the refuelling hose including the means for transmitting electric power comprise at least one electrically conductive coil to transfer electric power to the refuelling probe by inductive coupling. Inductive coupling may also be called wireless charging and the refuelling probe comprising the means for receiving electric power comprises at least one electrically conductive coil to receive electric power from the refuelling hose by inductive coupling.

In an embodiment, an in-flight refuelling system for an aircraft, the system comprising the refuelling hose comprising the means for transmitting electric power comprise a third electrically conductive member and a fourth electrically conductive member for transmitting electric power to the refuelling probe by resistive contact and the refuelling probe comprising the means for receiving electric power comprise a first electrically conductive member and a second electrically conductive member for receiving power from the refuelling hose by resistive contact.

In an embodiment, the first electrically conductive member comprises a rod and the second electrically conductive member comprises a cylinder that is concentrically located on the rod separated from the rod by electrically insulating material to form a two-pin probe. The two-pin probe is slidably mounted within a bore of the nozzle tip.

In an embodiment, the rod is attached to the cylinder by the electrically insulating material and the rod and cylinder together are slidably mounted within the bore of the nozzle tip. In another embodiment, the rod and cylinder are slidably mounted with respect to one another as well as the nozzle tip so that the electrically insulating material is attached to only one of the rod and cylinder.

In an embodiment, the two-pin probe is movable beyond the outer surface of the nozzle tip.

In an embodiment, the two-pin probe is slidably connected to the central axis of the nozzle by a first spring that surrounds the two-pin probe and by a ball/spring arrangement between the side wall of the cylinder and the side wall of the bore.

This nozzle may be used with a refuelling hose in which the third electrically conductive member of the valve member comprises a recess which is sized and shaped to mechanically engage with and provide an electrical contact to the rod providing the first electrically conductive member and the side wall of the cylinder providing the second electrically conductive member. In another embodiment, the valve member comprises a stepped recess, wherein an outer portion of the stepped recess is sized and shaped to contact the side wall of the second electrically conductive member, an intermediate portion is sized and shaped to engage the electrically isolation and an inner portion is sized and shaped to engage the rod.

In an embodiment, the nozzle further comprises an inner sleeve that surrounds the base of the nozzle tip, a nozzle body which is attached to a base of the two-pin probe, a central support and an outer sleeve. The inner sleeve is engaged to the nozzle body by a first spring that surrounds the base of the nozzle tip. The outer sleeve is engaged to the nozzle body by a second spring that surrounds the first spring, and the outer sleeve is coupled to the nozzle body by a ball/spring and to the inner sleeve by a spring;
In an embodiment, the nozzle tip is electrically isolated from two-pin plug and the nozzle body.

In an embodiment, the rod has a greater length than the cylinder such that the rod extends beyond the cylinder. The electrical isolation between the rod and cylinder has end face that is located between the second end face of the cylinder and the tip of the rod. Consequently, the distal end portion of the side wall of the rod that adjoin the tip remain exposed from electrical isolation.

In an alternative embodiment, the end face of first and second electrically conductive members is substantially coplanar.

In an embodiment, recesses for the balls are provided and the balls are pressed into the recesses by springs. A certain force applied to the two-pint probe causes balls to press against springs move out of recess and allow the two-pin probe to slidably move with respect to the nozzle tip.

In an embodiment, the third electrically conductive member contacts the first electrically conductive member of the nozzle and the fourth electrically conductive member contacts the second electrically conductive member of the nozzle to allow electric power to be transferred via the valve member and the nozzle from the tanker aircraft to the receiver aircraft.

In an embodiment, as the nozzle is pushed into the coupling, the nozzle tip pushes against the engaging portion and moves the valve member form the closed position to the open position forming a flow path between the valve and the inner walls of the fuel passage, allowing fuel within the refuelling hose to pass around the valve member and into the nozzle so as to refuel the receiver aircraft and pushes the third electrically conductive member into contact with the first electrically conductive member of the nozzle and the fourth electrically conductive member into contact with the second electrically conductive member of the nozzle so as to allow electric power to be transferred via the valve member and the nozzle from the tanker aircraft to the receiver aircraft.

In an embodiment, the second and fourth electrically conductive members are in contact with the fuel in the fuel passage when the valve member is in the open position.

Embodiments of the invention are described in more detail with reference to the accompanying schematic drawings that are listed below
Fig. 1 depicts a schematic view of a tanker aircraft, a receiver aircraft and an in-flight refuelling system.
Fig. 2 depicts an arrangement of a coupling and nozzle tip of an in-flight refuelling system according to a first embodiment.
Fig. 3 depicts a coupling and a nozzle tip of an in-flight refuelling system according to a second embodiment, whereby Fig. 3A shows the non-connected condition and Fig. 3B the connected condition.
Fig. 4 depicts an arrangement of a coupling and nozzle tip of an in-flight refuelling system according to a third embodiment.
Fig. 5 depicts a coupling and a nozzle tip of an in-flight refuelling system according to a fourth embodiment, whereby Fig. 5A shows the non-connected condition and Fig. 5B the connected condition.
Fig. 6 depicts an arrangement of a coupling and nozzle tip of an in-flight refuelling system according to a fifth embodiment.

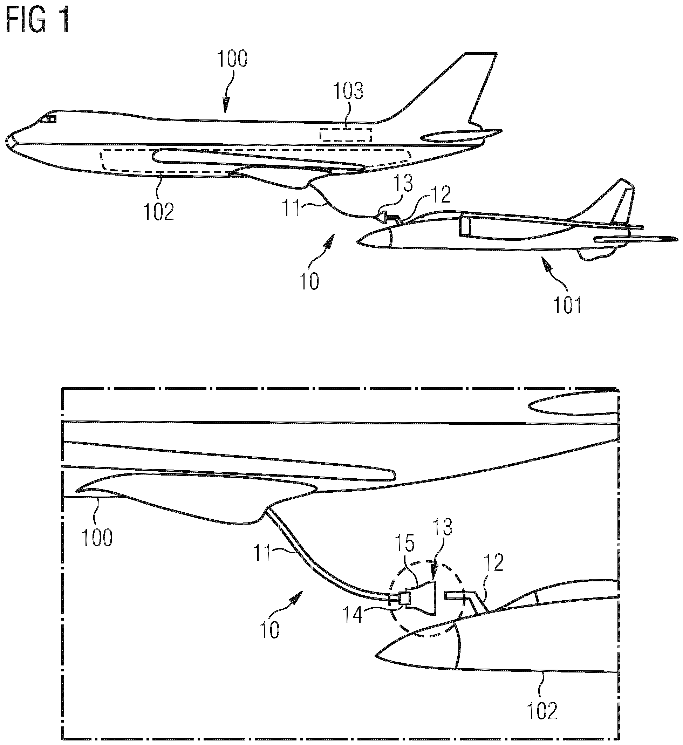

Figs 1 to 6 illustrate systems and devices for air-to-air supply of fuel and/or electrical power from a tanker aircraft 100 to a receiver aircraft 101. Which are depicted in Fig. 1. The receiver aircraft may be a manned or unmanned aircraft (UAV) with propulsion systems using fuel and/or electric power. This disclosure proposes an aerial refuelling system that allows refuelling with both electric power and conventional fuel. The tanker aircraft 100 can generate the electricity by way of its heat engines and a generator, by a fuel cell or can be equipped with a battery, an accumulator or capacitor or a combination thereof.

Fig. 1 depicts a tanker aircraft 100 comprising a fuel load 102 which is to be supplied to a receiver aircraft 101. The tanker aircraft 100 further comprises a supply of electric power 103 which is to be supplied to the receiver aircraft 101. Both the fuel and the electric power are supplied from the tanker aircraft 101 to the receiver aircraft 102 by way of an in-flight refuelling system 10. The in-flight refuelling system 10 is used during the flight of both aircraft 100, 101 and can be described as an air-to-air refuelling system. The in-flight refuelling system 10, which is also depicted in the enlarged view, comprises a refuelling hose 11 that is comprised in the tanker aircraft 100 and a refuelling probe 12 which is comprised in the receiver aircraft 101. The refuelling hose 11 comprises a drogue assembly 13 comprising a coupler 14 and a canopy 15.

The coupling 14 can be used to refuel aircraft 101 with conventional heat engines (i.e. jet engines, piston engines, turboprop, rocket engines) or a hybrid drive having both conventional fuel and electrically drive propulsion drives. The conventional fuel and the electrical current may be transferred sequentially, that is temporally separated. The power may be switched on after coupling the probe 12 and coupling 14 and switched off before decoupling the probe 12 from the coupling 14.

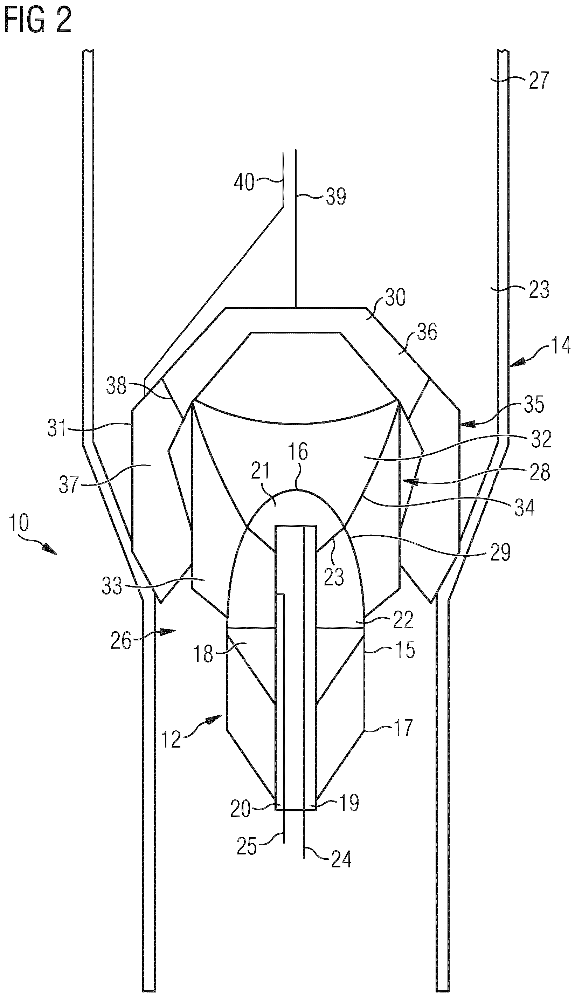

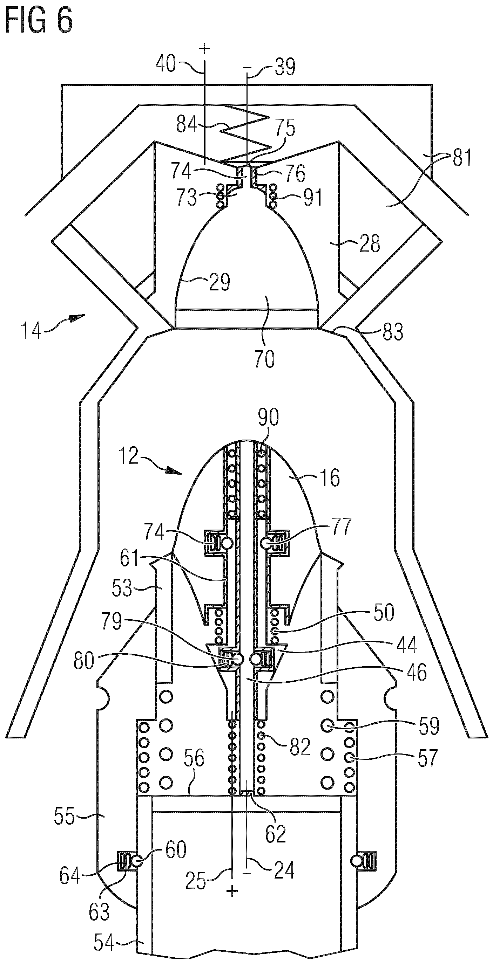

The embodiments illustrated in Figs 2 to 5 can be used to transfer AC as well DC power and conventional fuel due to the use of contact plugs and a direct resistive connection, i.e. a wired connection, between the coupler 14 and the probe 12. The embodiment illustrated in Fig. 6 can be used to transfer DC power and conventional fuel only due to the use of inductive coupling, i.e. a wireless connection, between the coupler 14 and the probe 12.

Fig. 2 depicts an in-flight refuelling system 10 according to a first embodiment and depicts the coupler 14 of the tanker aircraft 100 and the probe 12 of the receiver aircraft 101.

The refuelling probe 12 of the receiver aircraft 101 comprises a nozzle 15 comprising a nozzle tip 16 and body 17 comprising a chamber 18 for the passage of fuel. The nozzle 15 comprises means for receiving electric power from the refuelling hose 11 of the tanker aircraft 100. In an embodiment, the means for receiving electric power comprises a first electrically conductive member 19 and a second electrically conductive member 20 for receiving power from the refuelling hose 12 by resistive contact.

In this embodiment, the nozzle tip 16 is divided into two portions 20 and 21 which are electrically isolated with the intervening isolation 23 against each other. The two portions 21, 22 provide the first and second electrically conductive member 19, 20, respectively, for carrying electric power. The portion 21 is connected to a negative pole and the portion 22 to a positive pole of the probe 12 which is in turn connected to, for example the recharger of the accumulator of the receiver aircraft 101 by the wires 24 and 25.

The coupling 14 of the refuelling hose 11 of the tanker aircraft 100 comprises an opening 26 for receiving the refuelling probe 12 of the receiver aircraft 101, a main body 27 providing a fuel passage 23, and a valve member 28 disposed in the fuel passage that is configured to move between a first position and a second position. In the first position, the valve member 28 closes the fuel passage 23 and in the second position opens the fuel passage 23 to allow refuelling of the receiver aircraft 101. The valve member 28 comprises a nozzle engaging portion 29 that is shaped to correspond to a nozzle tip 16 of the nozzle 15 refuelling probe 12. The valve member 28 also comprises means for transmitting electric power to the refuelling probe. In an embodiment, the means for transmitting electric power comprise a third electrically conductive member 30 and a fourth electrically conductive member 31 for transmitting electric power to the refuelling probe by resistive contact.

In this embodiment, the valve member 28 is divided in the portions 32 and 33 by the isolation 34 to provide the third and fourth electrically conductive members 30, 31. The wall 35of the coupling 14 is also divided into two portions 36 and 37 by the isolation 38. The portions 36, 37 of the wall 35 are connected to the tanker aircraft 2 by the wires 39, 40.

Electric power is transmitted from the coupler 14 to the probe 12 by bringing the first electrically conductive member 19 into direct contact with the third electrically conductive member 30 and the second electrically conductive member 20 into direct contact with the fourth electrically conductive member 31. At the same time, the nozzle tip 16 is in direct contact with the nozzle engaging portion 29 and has pushed the valve member 28 into the open position so that liquid fuel can flow through the fuel passage into the receiver aircraft 101, in particular into the fuel tank of the receiver aircraft 101.

In the transferring mode of operation, shown in Fig. 2, the portions 21 and 22 of the nozzle tip 16 are pressed against the portions 32 and 33 of valve member 28 in a way, that electricity is conducted from the portion 32 of the valve member 28 to the portion 21 of the nozzle 12 and from the portion 22 of the nozzle 12 to the portion 33 of the valve member 28. The portion 32 of the valve member 28 is pressed against the portion 36 of the wall 35 and the portion 33 of the valve member 28 is pushed against the portion 37 of the wall 35.

If the receiver aircraft 101, is purely electrically driven, e.g. a UAV 8, a sealing is used prevents the escape of conventional fuel (i.e. kerosene) from the tanker aircraft 100. If the receiver aircraft is a hybrid one, the sealing may be omitted. Electricity and conventional fuel can be transferred in parallel from the tanker aircraft 100 to the receiver aircraft 101 as conventional aircraft fuel does not conduct electricity.

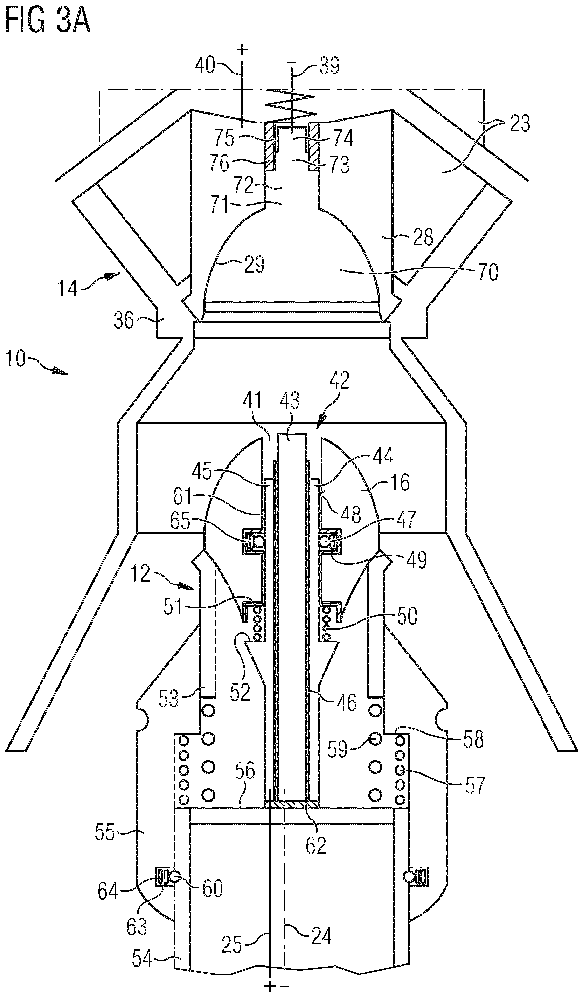

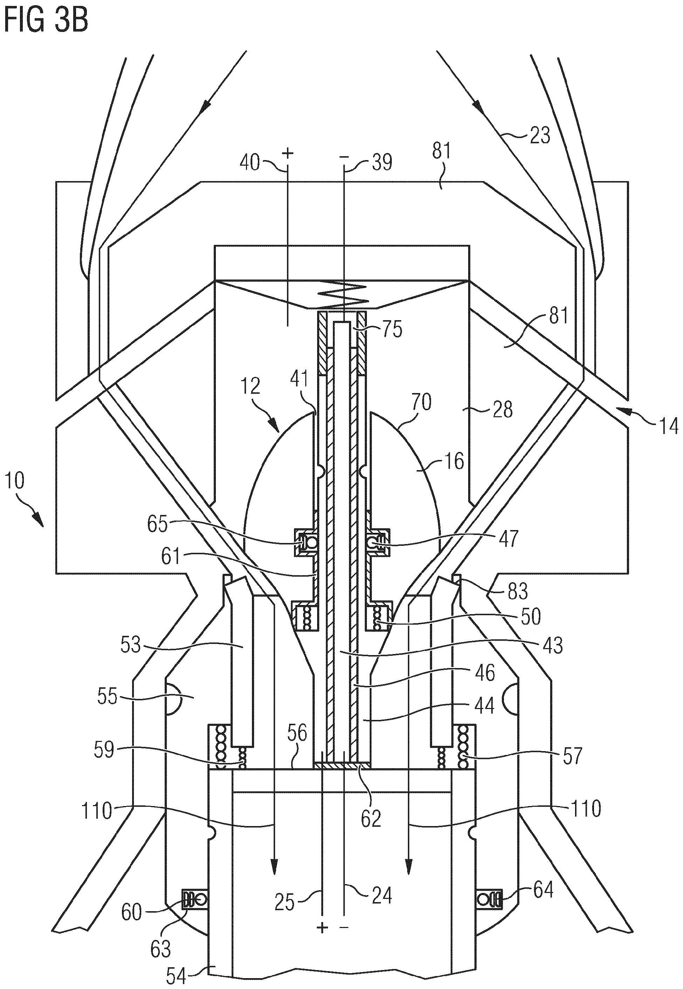

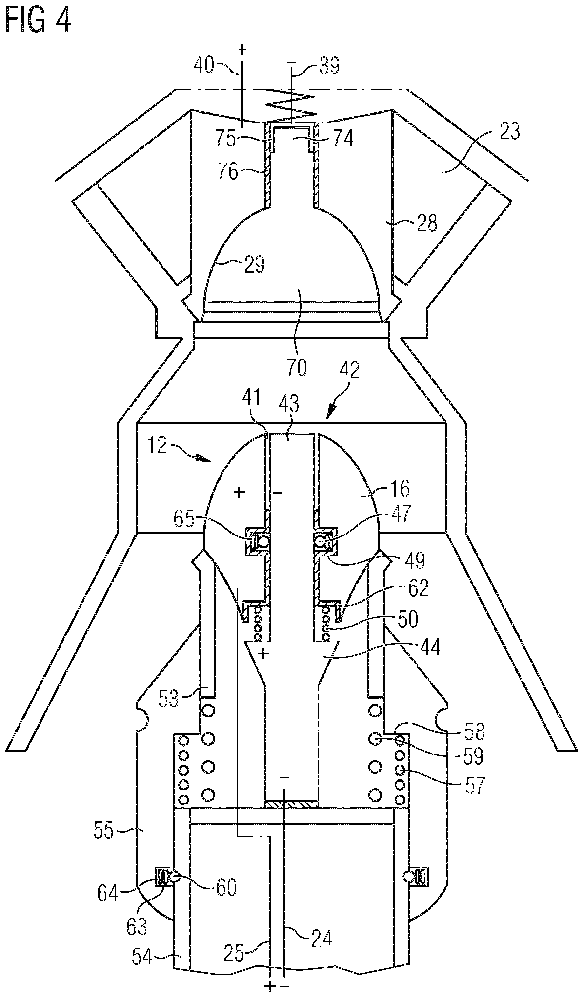

Fig. 3, which includes Figs 3A and 3B, depicts a refuelling system 10 according to a second embodiment and show the refuelling probe 12 of the receiver aircraft 101 and the coupler 14 of the tanker aircraft 100 in an unconnected condition in Fig. 3 and in the connected condition in Fig 4.

The nozzle tip 16 of the refuelling probe 12 comprises an axial bore 41 in which a two-pin probe 42 for transferring electric power from the coupler 14 is located. The two-pin probe 42 comprises a central rod 43 providing the first electrically conductive member 19 and a sleeve 44 comprising a cylindrical portion 45 which is concentrically arranged about the central rod 43. The sleeve 44 provides the second electrically conductive member 20. The sleeve 44 is electrically insulated from the rod 43 by way of an intervening electrically insulating layer 46.

The two-pin probe 42 is slidably mounted within the bore 41 of the nozzle tip 16 and is movable beyond the outer surface of the nozzle tip 16. The two-pin probe 42 is slidably connected to the bore 41 of the nozzle 15 by a ball/spring arrangement 47 located between the outer side wall 48 of the cylindrical portion 45 and a recess 49 in the inner side wall of the bore 41 and by a first spring 50 that surrounds the two-pin probe 42 and is located between a flange 51 of the nozzle tip 16 that faces inwards and a flange 52 of the sleeve 44 which extends radially from the side wall 48 of the cylindrical portion 45. The flange 52 of the sleeve 44 faces outwards. Inwards refers to a direction facing the receiver aircraft 101 and outwards a direction facing the coupling 14.

Referring to Figs 3A and 3B, the nozzle 12 further comprises an inner sleeve 53 that surrounds the base of the nozzle tip 16, a nozzle body 54 which is attached to a base of the two-pin probe 42 and an outer sleeve 55. The inner sleeve 53 is engaged to the nozzle body 54 by a second spring 59 that is retained between an end face of the inner sleeve 53 and a support surface 56 of the nozzle body 54. The second spring 59 is a helical coil spring and surrounds the base of the nozzle tip 16. The outer sleeve 55 is engaged to the nozzle body 54 by a third spring 57 that is retained between a flange 58 formed in the inner surface of the outer sleeve 55 and the support surface 56 of the nozzle body 54. The third spring 57 is a helical coil spring and surrounds the second spring 59. The outer sleeve 55 is coupled to the nozzle body 54 by a ball/spring 60, 64 located in a recess 63 formed in the inner surface of the outer sleeve 55 and is slidably retained on the inner sleeve 53.

In an embodiment, the rod 43 provides the minus pole and the cylinder the plus pole of the two-pin probe 42. The two-pin probe 42 is electrically insulated from the nozzle tip 16 by an electrically insulating layer 61 that coats the side wall of the bore 41 and the flange 51 facing towards the flange 52 of the sleeve 44. The two-pin probe 42 can also be described as a plug as it fits into and engages at least one recess 70 or socket in the valve member 28 to provide electrical contacts enabling electricity to flow from the refuelling hose 12 via its valve member 28 to the nozzle 15 and the probe 12. The sleeve 44 and rod 43 provide the minus and the plus pole are mechanically connected by the isolation 46, e.g. the isolation 46 may be glued to the outer surface of the rod 43 and inner surface of the sleeve 44.

The two-pin plug 42 is also electrically isolated from the nozzle body 54 by a further electrically insulating layer 62 that may be attached to the end face of the rod 43 and sleeve 44 and/or to the support surface 56.

The nozzle body 54 of the main probe body 12 is locked with the outer sleeve 55 by at least one ball 60, which is pressed by the springs 64, i.e. cup springs, in recesses 63 in nozzle body 54. The springs 64 define the threshold X of force, at which outer sleeve 55 becomes unlocked from and moveable relative to the nozzle body 54. The outer sleeve 55 is also linked to the nozzle body 54 by the third spring 57, i.e. a coil spring such as a helical spring. The spring 57 is stress-free or pressed condition and is retained between the support surface 56 of the nozzle body 54 and a flange 58 formed on the inner surface of the outer sleeve 55. The inner sleeve 53 is connected to nozzle body 54 by the spring 59, i.e. a coil spring, e.g. a helical spring. The spring 55 is retained between the end face of the Inner sleeve 53 and the support surface 56 of the nozzle body 54. The spring 59 is in a pressed condition, so the inner sleeve 53 cannot move toward the receiver aircraft 101 due to air drag. The outer sleeve 55 is moveable relative to the inner sleeve 53 and the nozzle body 54. The outer sleeve 55 guides the movement of the inner sleeve 53.

The nozzle body 54 is mechanically connected by the isolation 62 with the two-pin probe 42. The sleeve 44 and the rod 43 are linked to the receiver aircraft 101, in particular power storage device, e.g. a battery, by the electrical wires 24, 25.

The axial bore 41 formed in the nozzle 15 is coated with electrical isolation 61. The two-pin probe 42 is slidably engaged with the bore 41 by balls 47 that are pressed by the springs 65 against the outer surface of the sleeve 44. The springs 65, i.e. cup springs, define the threshold Y of force, at which the two-pint probe 42 becomes moveable relative to the nozzle 15. The threshold Y is equal to the threshold X. The two-pin probe 43 guides the movement of the nozzle 15. A spring 50, i.e. a helical coil spring, connects the nozzle tip 16 to the sleeve 44. The spring 50 can be in a stress-free condition.

The coupling 14 of the tanker 100 comprises a third and a fourth electrically conductive member 30, 31 that contact the rod 43 and sleeve 44 of the two-pin probe 42 of the probe 12. The valve member 28 of the coupling 14 comprises a recess 70 for the nozzle 15, which comprises multiple recess portions including a recess 71 for the isolation 61, the recess 72 for the sleeve 44 and a recess 73 for the isolation 46 of the two-pin probe 42. A recess 74 for the rod 43 is formed at the base of the recess 70 in which an electrode 75, e.g. a metal socket is located. The recess 70 is electrically insulated from the valve member 28 by an electrically insulating layer 76. The valve member 28 provides the fourth electrically conducting member 30 and the socket 75 provides the third electrically conductive member 31. The valve member 28 and the socket 75 are each connected by electrical wire 39, 40 to the tanker aircraft 100, in particular to an electric power source of the tanker aircraft 100.

Referring to Fig.3B, which shows connected condition of the coupler 14 and probe 12, during inserting the main probe 12 into the coupling 14 of the refuelling hose 11, the body 54 of the nozzle 12 jolts to the wall 36 of the coupler 14. Then the spring 50 is compressed and the nozzle 15 moves into the recess 70. When the nozzle 15 fills in the recess 70, the rod 43 moves towards wall, pressing the spring 47. If the sleeve 44 jolts to the valve member 28, the thresholds X and Y are exceeded. The balls 60 and 47 are pressed outwards and the nozzle body 54 becomes moveable relative to the outer sleeve 55 and the two-pin probe 42 becomes moveable relative to the nozzle 15. The nozzle body 54 presses the two-pin probe 42 into the corresponding recesses 71, 72, 73, 74. The springs 59 and 57 are compressed and the spring 50 is compressed further.

The electrical and fuel connection between the tanker aircraft 100 and the receiver aircraft 101 is completed and fuel and the electrical current can flow from the coupling 14 into the probe 12 as shown by the arrows 110.

To disconnect the probe and the coupling, for example if refuelling is completed or if the receiver aircraft 101 reduces its speed, the springs 50, 59, 57 transform the connected condition depicted in Fig. 3B back to the unconnected condition depicted in Fig. 3A. The springs 65 lock the balls 47 in the recess 49 in the nozzle 15 to the rod 42 and the balls 60 in the recess 63 in the outer sleeve 55 to the nozzle body 54.

Fig. 4 depicts an in-flight refuelling system 10 according to third embodiment. The refuelling system 10 depicted in Fig. 4 differs from the second embodiment depicted in Fig. 3 in the arrangement of the first and second electrically conductive members 19, 20 of the probe 12. The first electrically conductive member is provided by a rod 43 that is slidably mounted in the bore 41 or through opening formed along the longitudinal axis of the nozzle tip 16. The second electrically conductive member is provided by the nozzle tip 16. The sleeve 44 and isolation 46 are omitted. In this third embodiment, the nozzle tip 16 provides minus pole and the nozzle tip 16 provides plus pole of the two-pin arrangement for receiving electrical power from the coupling 14 and tanker aircraft 100.

The pin probe has a diameter so that it engages with the electrically conductive socket 75 formed at the base of the opening 70 in the valve member 28. The nozzle tip 16 has an outer surface that engages with the nozzle engagement surface of the valve member 28 so that the positive pole is provided by the nozzle tip 16 and valve member 28.

Consequently, the coupling 14 of the refuelling hose 11 is modified compared to the refuelling system of the second embodiment in that the recess 73 in the valve member 22 is omitted. The rod 43 and valve member 28 invert their polarity.

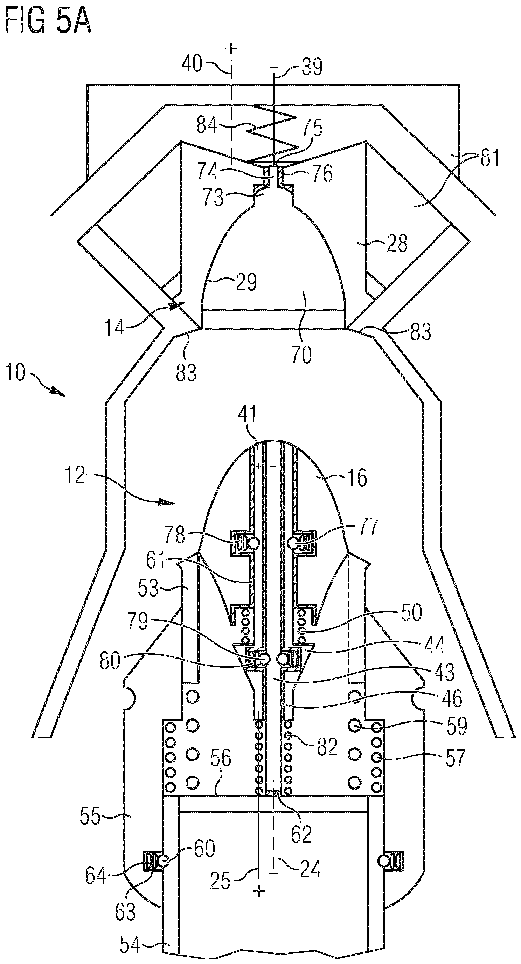

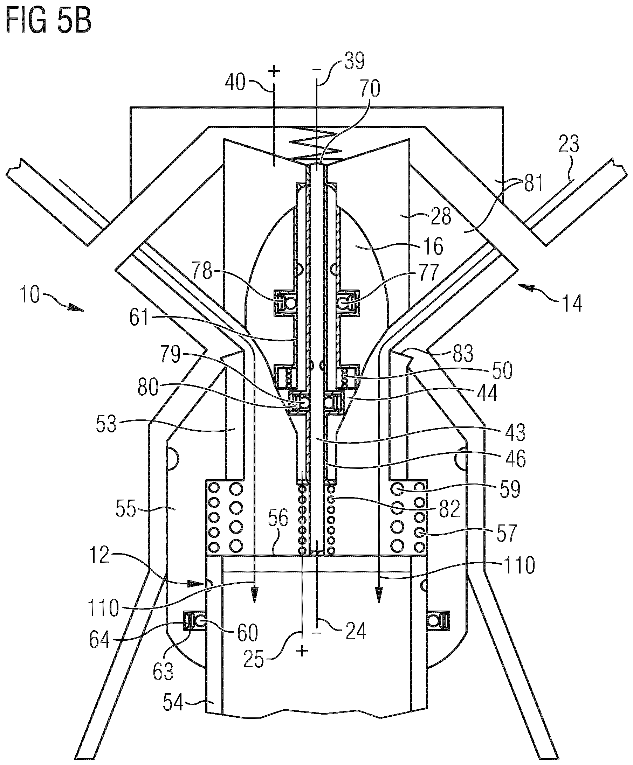

Fig. 5 depicts an in-flight refuelling system 10 according to a fourth embodiment, whereby Fig. 5A shows the receiver aircraft 101 and the tanker 100 and the probe of the receiver aircraft 101 and the coupling 14 of the tanker aircraft 100 in an unconnected condition and Fig. 5B in the connected condition.

The refuelling system 10 of the fourth embodiment includes a two-pin probe 42 for the electrical connection. The two-pin probe 42 comprises a rod 43 and a sleeve 44 having a cylindrical portion 45 that surrounds the rod 43 but differs from the second embodiment shown in Fig. 2 in that the rod 43 is moveable relative to the sleeve 44. The isolation 61 is rigidly connected to the bore 41 of the nozzle tip 16 either by glue or coating. The sleeve 44 is locked by the balls 77 and the cup springs 78 to the nozzle tip 12. In the unlocked condition the sleeve 44 can move relative to the nozzle tip 16.

The isolation 46 is rigidly connected to the plus pole provided by the sleeve 44 either by glue or coating. The minus pole provided by the rod 43 is locked by the balls 79 and the cup springs 80 to the rod 43 provided by the cylinder 44. In the unlocked condition the sleeve 44 is moveable relative to the rod 43. The rod 43 is rigidly connected by the isolation 62 to the support surface 56 of the tube body 54. The sleeve 44 is supported by a coil spring 84 that is retained between the support surface 56 of the tube body 54 and the end face of the sleeve 44 and that surrounds the central rod 43. The rod 43 and the sleeve 44 are electrically connected to receiver aircraft 101 by the wires 24, 25, respectively.

The outer sleeve 55 provides a seal and is locked to the tube body 54 by the balls 60 and the cup springs 64. In the unlocked condition the outer sleeve 55 can move relative to the nozzle body 54. The nozzle body 54 may comprise the tube end of the nozzle 12. The inner sleeve 53 provides a seal and is jointed to the tube body 54 by the coil spring 59 and relatively moveable to the tube body 54 and the outer sleeve 55.

In the unconnected condition, shown in Fig. 5A, the rod 43 and the sleeve 44 align with the outer surface of the nozzle tip 16, so that the nozzle tip 16, and the first and second electrically conducive members 19 and 20 form a continual surface. This has advantages from the aerodynamic point of view.

As an alternative to the ball / cup spring combinations, wedge / cup spring combinations can be used.

The coupling 14 of the tanker aircraft 100 comprises the valve member 28 with a recess 70 for the nozzle 12, a recess 73 for the sleeve 44 and the recess 74 for the rod 43. The valve member 28 provides the plus pole and is in electrical contact with the sleeve 44. Also, there an isolation layer 76 is located on the recess 74. The valve member 28 is jointed to the bracket 81 by the coil spring 82. The wires 39, 40 connect the minus pole provided by the valve member 28 and the plus pole provided by the conductive layer 75 at the base of the recess 74 on the tanker side.

Referring to Figs 5A and 5B, to form the connected condition, the receiver aircraft 101 moves the nozzle 12 towards the cavity 70 in the valve member 28. The outer sleeve 53 abuts to the stop 83 of the bracket 81. The nozzle 12 and the outer sleeve 55 proceed and the coil spring 59 becomes pressed. When the outer sleeve 55 abuts to the stop 83 the balls 60 are pressed outwards. From now the spring 57 is pressed, too. The outer sleeve 55 moves relatively to the tube body 54. The nozzle tip 16 proceeds and abuts to the valve member 28. This is pressed towards the bracket 81. When the valve member 28 abuts to the bracket 81, the balls 77 are pressed outwards. The rod 43 can now move relatively to the nozzle tip 16. The spring 50 becomes pressed. When the rod 43 abuts to the isolation 76 in the recess 70 of the valve member 28, the balls 79 are pressed outwards. The sleeve 44 can now move relatively to the rod 43 until the rod 43 abuts to the minus pole 75 on the tanker side. The spring 82 becomes pressed.

The thresholds for the release forces of the balls 60, 77, 79 is determined by the selection of the cup springs 64, 78, 79 and their prestressing. The cup springs and their prestressing also defines the release forces, when the wedge/cup spring solution is used. Dampers may be installed parallel to the springs in order to reach the asymptotic case for the recovery movement back to the unconnected condition of Figs 3 to 5.

Fig. 5B shows the connected condition between the tanker aircraft 100 and the receiver aircraft 101 and between the coupling 14 of the refuelling hose of the tanker aircraft 100 and the probe 12 of the receiver aircraft 101. The fuel, as shown by the arrows 110, and the electrical current can flow from the tanker aircraft 100 to the receiver aircraft 101.

To disconnect the connection, for example if the receiver aircraft 101 reduces its speed, or if refuelling is complete, the outer sleeve 55, the rod 43 and the sleeve 44 are unlocked. The springs 84, 57, 59, 50, 82 transform the connected condition from Fig. 5B back the unconnected condition of Fig. 5A.

Fig. 6 depicts an in-flight refuelling system according to a fifth that differs from the depicted in Figs 2 to 5, in that the electric power is transmitted from the tanker aircraft 100 to the receiver aircraft 101 by inductive coupling rather than by a resistive coupling, i.e. a direct metal to metal contact.

In this embodiment, the second electrically conductive member 20 comprises a first coil 90 that surrounds the top portion of the pin 43 which provides the first electrically conductive member 19. The first coil 90 is supported by the remainder of the second electrically conductive member which has the form of a sleeve 44 that surrounds the rod 43. In the coupling 14, the recess 70 for the rod 43 is surrounded by a second coil 91 that provides the fourth electrically conductive member 31. The wire of both coils is coated with an isolating coating. In this embodiment, AC power, only, is transmitted in a contactless manner between the first coil 90 and the second coil 91. The receiver aircraft 101 converts the received AC signal to DC power which is used to charge its accumulator.

### List of reference signs:

10 in-flight refuelling system
11 refuelling hose
12 refuelling probe
14 coupling
15 nozzle
16 nozzle tip
17 body
18 chamber
19 first electrically conductive member
20 second electrically conductive member
21 portion of nozzle tip
22 portion of nozzle tip
23 electrical isolation
24 wire
25 wire
26 opening of refuelling hose
27 main body
23 fuel passage
28 valve member
29 nozzle engaging portion
30 third electrically conductive member
31 fourth electrically conductive member
32 portion of the valve member
33 portion of valve member
34 electrical isolation
35 wall
36 portion of wall
37 portion of wall
38 electrical isolation
39 wire
40 wire
41 bore
42 two-pin probe
43 central rod
44 sleeve
45 cylindrical portion
46 electrically insulating layer
47 ball spring arrangement
48 outer wall
49 recess
F50 first spring
51 flange
52 flange
53 in the sleeve
54 nozzle body
55 outer sleeve
56 support surface
57 third spring
58 flange
59 second spring
60 ball
61 electrical isolation
63 recess
64 cup spring
65 cup spring
70 recess
71 recess
72 recess
73 recess
74 recess
75 electrode
76 electrically insulating layer
77 ball
78 cup spring
79 ball
80 cup spring
81 bracket
82 coil spring
83 stop

91 first coil
91 second coil

100 tanker aircraft
101 receiver aircraft
102 fuel supply
103 electric power supply
110 fuel flow

## Claims

1. A refuelling hose (11) of an in-flight refuelling system (10) for a tanker aircraft (100), wherein the refuelling hose (12) comprises a coupling (14), the coupling (14) comprising:
an opening for receiving a refuelling probe (12) of a receiver aircraft (101),
a main body (81) comprising a fuel passage (23), and
a valve member (28) disposed in the fuel passage (23) that is configured to close the fuel passage (23) and to open the fuel passage (23) to allow refuelling of the receiver aircraft (101), wherein the valve member (28) comprises a nozzle engaging portion (29) that is shaped to correspond to a nozzle tip (16) of the refuelling probe (12) and means (36, 37; 28, 75) for transmitting electric power to the refuelling probe (12).

2. The refuelling hose (11) according to claim 1, wherein the means for transmitting electric power comprise a third electrically conductive member (36; 28) and a fourth electrically conductive member (37; 75) for transmitting electric power to the refuelling probe by resistive contact.

3. The refuelling hose (11) according to claim 1, wherein the means for transmitting electric power comprise at least one electrically conductive coil (91) to transfer electric power to the refuelling probe (12) by inductive coupling.

4. A refuelling probe (12) of an in-flight refuelling system for a receiver aircraft (101), wherein the refuelling probe (12) comprises a nozzle (15) comprising a nozzle tip (16) and a fuel passage, and the nozzle tip (16) comprises means (42; 91) for receiving electric power from a refuelling hose (11) of a tanker aircraft (100).

5. The refuelling probe (12) according to claim 4, wherein the means for receiving electric power comprise a first electrically conductive member (43) and a second electrically conductive member (44) for receiving power from the refuelling hose (11) by resistive contact.

6. The refuelling probe (12) according to claim 4, wherein the means for receiving electric power comprises at least one electrically conductive coil (90) to receive electric power from the refuelling hose (11) by inductive coupling.

7. An in-flight refuelling system (10) for an aircraft, the system comprising the refuelling hose (11) of claim 1 or claim 2 and the refuelling probe (12) according to claim 4 or claim 5.

8. The in-flight refuelling system (10) according to claim 7, wherein the first electrically conductive member (43) comprises a rod and the second electrically conductive member (44) comprises a cylinder (45) that is concentrically located on the rod (43) and separated from the rod (43) by electrically insulating material (46) to form a two-pin probe (42), wherein the two-pin probe (42) is slidably mounted within a bore (41) of the nozzle tip (16).

9. The in-flight refuelling system (10) according to claim 8, wherein the two-pin probe (42) is slidably connected to the central axis of the nozzle tip (16) by a first spring (50) that surrounds the two-pin probe (42) and by a ball/spring arrangement (47) between the side wall of the cylinder (45) and the side wall of the bore (41).

10. The in-flight refuelling system (10) according to claim 8 or claim 9, wherein the third electrically conductive member of the valve member (28) comprises a recess (75) which is sized and shaped to mechanically engage with and provide an electrical contact to the rod (43) providing the first electrically conductive member and wherein the side wall of the cylinder (45) provides the second electrically conductive member and engages with a wall of a recess 71 formed in the valve member (28).

11. The in-flight refuelling system according to any one of claims 8 to 10, wherein the nozzle (12) further comprises:
an inner sleeve (53) that surrounds the base of the nozzle tip (16);
a nozzle body (54) which is attached to a base of the two-pin probe (42);
an outer sleeve (55);
wherein the inner sleeve (53) is engaged to the nozzle body (54) by a second spring (59) that surrounds the base of the nozzle tip (16),
wherein the outer sleeve (55) is engaged to the nozzle body (54) by a third spring (57) that surrounds the second spring (59), and by a ball/spring (60; 64).

12. The in-flight refuelling system (10) according to any one of claims 4 to 11, wherein the third electrically conductive member (75) contacts the first electrically conductive member (43) of the nozzle (12) and the fourth electrically conductive member (28) contacts the second electrically conductive member (44) of the nozzle (12) to allow electric power to be transferred via the valve member (28) and the nozzle (12) from the tanker aircraft (100) to the receiver aircraft (101).

13. The in-flight refuelling system (10) according to any one of claims 4 to 12, wherein as the nozzle (12) is pushed into the coupling (14), the nozzle tip (16) pushes against the engaging portion (29) and moves the valve member (28) from the closed position to the open position forming a flow path between the valve member (28) and the inner walls of the fuel passage (23), allowing fuel within the refuelling hose (12) to pass around the valve member (28) and into the nozzle (12) so as to refuel the receiver aircraft (101), and pushes the third electrically conductive member (75) into contact with the first electrically conductive member (43) of the nozzle (12) and the fourth electrically conductive member (28) into contact with the second electrically conductive member (44) of the nozzle (12) so as to allow electric power to be transferred via the valve member (28) and the nozzle (12) from the tanker aircraft (100) to the receiver aircraft (101).

14. The in-flight refuelling system (10) according to claim 13, wherein the second and fourth electrically conductive members (28, 16) are in contact with the fuel in the fuel passage (23) when the valve member (28) is in the open position.

15. An in-flight refuelling system (10) for an aircraft, the system comprising the refuelling hose (11) according to claim 3 and the refuelling probe (12) according to claim 6.
